# EUROPEAN PATENT SPECIFICATION

(11) **EP 3 491 893 B1**
(45) Date of publication and mention of the grant of the patent: **01.01.2020**
(21) Application number: 17735593.0
(22) Date of filing: 11.07.2017
(51) Int. Cl.: H05B 33/08, H05B 37/02

(54) **METHOD FOR CALIBRATION OF LIGHTING SYSTEM SENSORS**
VERFAHREN ZUR KALIBRIERUNG VON BELEUCHTUNGSSYSTEMSENSOREN
PROCÉDÉ D'ÉTALONNAGE DE DÉTECTEURS DE SYSTÈME D'ÉCLAIRAGE

(30) Priority: 28.07.2016 EP 16181772
(43) Date of publication of application: 05.06.2019
(73) Proprietor: Signify Holding B.V., 5656 AE Eindhoven (NL)
(72) Inventor: BROERS, Harry, 5656 AE Eindhoven (NL); RAJAGOPALAN, Ruben, 5656 AE Eindhoven (NL)
(74) Representative: Verweij, Petronella Daniëlle
(86) International application number: PCT/EP2017/067326
(87) International publication number: WO 2018/019561

(56) References cited:
- WO-A1-2015/063479
- US-A1- 2014 239 817
- US-A1- 2015 076 991
- US-A1- 2016 073 475

## Description

### FIELD OF THE INVENTION

The present disclosure is directed generally to methods and systems for calibrating sensors.

### BACKGROUND

Sensor-driven lighting units monitor a characteristic of the environment with a sensor and utilize the sensor data to control the light source of the lighting unit. The most common example of sensor-driven lighting units are systems that monitor light levels using integrated photocells that measure ambient light levels. For example, night lights use ambient light to turn on when ambient light levels decrease and to turn off when ambient light levels increase. Similarly, smart street lighting uses detected ambient light to determine when to turn the light source on and off. In these devices, there is no relationship between the surface or area from which the ambient light level is monitored and the target surface to be illuminated.

More complex lighting systems, however, consider the target surface to be illuminated by the light source. For example, these lighting systems may comprise a matrix sensor, which typically comprises a plurality of sensing elements and is configured to provide information such as presence information or illumination quality to the lighting system or unit. The light measurement is typically performed by one or more photocells or ambient-light-sensors that average out the light they observe in order to produce a single lux value. The lighting system or luminaire can comprise the matrix sensor as an integrated or external sensor that monitors the surface to be illuminated by measuring the reflected light coming from the surface below. For example, the matrix sensor may instruct the lighting system to dim the light output when the light level exceeds the required light level defined by the light sensor set point.

However, this sensor configuration may result in sub-optimal measurements in scenarios when the lighting infrastructure is illuminating regions outside the field of view of the ambient light level sensor. Additionally, the sensor configuration may not be optimal if the matrix sensor is unable to accurately measure the reflected light within the illumination field and/or the field of view.

Document WO2015/063479 Aldiscloses an apparatus for controlling an electrical load in a room, which comprises an occupancy sensor comprising a thermopile array and a movement sensor.

Document US2015/076991 A1 discloses a lighting system wherein illuminance sensors of a plurality of areas are calibrated based on detected values of an illuminance sensor of a smartphone.

Accordingly, there is a continued need in the art for methods and systems that allow for the calibration of sensors that measure and characterize the illumination of a target surface within a lighting environment, in order to provide a more accurate light profile.

### SUMMARY OF THE INVENTION

The present disclosure is directed to inventive methods and apparatus for measuring illumination of a target surface within a lighting environment. Various embodiments and implementations herein are directed to a lighting unit with both a first sensor, being a thermal imager, and an external second sensor, such as a camera, a time-of-flight camera, a multispectral imager, an occupancy sensor, a thermal imager, and/or a microphone. The external second sensor is configured to obtain sensor information for a predetermined region within the sensor region of the first sensor. The lighting system then calibrates the first sensor with the information from the external second sensor, and adapts the light output with the calibrated first sensor as necessary.

Generally, in one aspect, a method for calibrating a first sensor of a lighting unit, the first sensor comprising a thermal imager, the method includes the steps of: illuminating, with a light source of the lighting system, a target surface; obtaining, with the first sensor, sensor data from a first region of the target surface, the sensor data comprising thermal data; obtaining, with a second sensor, sensor data from a second region, wherein the second region is a smaller region within the first region; calibrating, using the sensor data obtained with the second sensor, the first sensor; and adjusting a parameter of the lighting unit based on data from the calibrated first sensor.

According to an embodiment, the method further comprises the step of manually selecting the second region.

According to an embodiment, the method further comprises the step of selecting the second region based at least in part on the sensor data obtained from the second sensor.

According to an embodiment, the method further comprises the step of obtaining, with the calibrated first sensor, additional sensor data from a first region the target surface.

According to an embodiment, the second sensor can be a light sensor, a camera, a time-of-flight camera, a multispectral imager, an occupancy sensor such as a passive infrared sensor (PIR) among other types of occupancy sensors, a thermal imager, an RF-sensor, and/or a microphone.

According to an embodiment, the calibration step comprises a comparison of the sensor data obtained by the first sensor to the sensor data obtained by the second sensor.

According to an aspect, a lighting unit is configured to calibrate a first sensor comprising a thermal imager. The lighting unit includes: a light source; the first sensor configured to obtain sensor data from a first region of a target surface, the sensor data comprising thermal data; a second sensor configured to obtain sensor data from a second region, the second region being a smaller region within the first region; and a controller configured to calibrate the first sensor using the sensor data obtained with the second sensor, and adjust a parameter of the lighting unit based on data from the calibrated first sensor.

According to an aspect, a lighting system is configured to calibrate a first sensor comprising thermal data. The lighting system includes: a lighting unit comprising a light source, a controller, and the first sensor, the first second configured to obtain sensor data from a first region of a target surface, the sensor data comprising thermal data; a second sensor configured to obtain sensor data from a second region, where the second region is a smaller region within the first region; and where the controller is configured to calibrate the first sensor using the sensor data obtained with the second sensor, and adjust a parameter of the lighting unit based on data from the calibrated first sensor.

As used herein for purposes of the present disclosure, the term "LED" should be understood to include any electroluminescent diode or other type of carrier injection/junction-based system that is capable of generating radiation in response to an electric signal. Thus, the term LED includes, but is not limited to, various semiconductor-based structures that emit light in response to current, light emitting polymers, organic light emitting diodes (OLEDs), electroluminescent strips, and the like. In particular, the term LED refers to light emitting diodes of all types (including semiconductor and organic light emitting diodes) that may be configured to generate radiation in one or more of the infrared spectrum, ultraviolet spectrum, and various portions of the visible spectrum (generally including radiation wavelengths from approximately 400 nanometers to approximately 700 nanometers). Some examples of LEDs include, but are not limited to, various types of infrared LEDs, ultraviolet LEDs, red LEDs, blue LEDs, green LEDs, yellow LEDs, amber LEDs, orange LEDs, and white LEDs (discussed further below). It also should be appreciated that LEDs may be configured and/or controlled to generate radiation having various bandwidths (e.g., full widths at half maximum, or FWHM) for a given spectrum (e.g., narrow bandwidth, broad bandwidth), and a variety of dominant wavelengths within a given general color categorization.

For example, one implementation of an LED configured to generate essentially white light (e.g., a white LED) may include a number of dies which respectively emit different spectra of electroluminescence that, in combination, mix to form essentially white light. In another implementation, a white light LED may be associated with a phosphor material that converts electroluminescence having a first spectrum to a different second spectrum. In one example of this implementation, electroluminescence having a relatively short wavelength and narrow bandwidth spectrum "pumps" the phosphor material, which in turn radiates longer wavelength radiation having a somewhat broader spectrum.

It should also be understood that the term LED does not limit the physical and/or electrical package type of an LED. For example, as discussed above, an LED may refer to a single light emitting device having multiple dies that are configured to respectively emit different spectra of radiation (e.g., that may or may not be individually controllable). Also, an LED may be associated with a phosphor that is considered as an integral part of the LED (e.g., some types of white LEDs). In general, the term LED may refer to packaged LEDs, non-packaged LEDs, surface mount LEDs, chip-on-board LEDs, T-package mount LEDs, radial package LEDs, power package LEDs, LEDs including some type of encasement and/or optical element (e.g., a diffusing lens), etc.

The term "light source" should be understood to refer to any one or more of a variety of radiation sources, including, but not limited to, LED-based sources (including one or more LEDs as defined above), incandescent sources (e.g., filament lamps, halogen lamps), fluorescent sources, phosphorescent sources, high-intensity discharge sources (e.g., sodium vapor, mercury vapor, and metal halide lamps), lasers, other types of electroluminescent sources, pyro-luminescent sources (e.g., flames), candle-luminescent sources (e.g., gas mantles, carbon arc radiation sources), photo-luminescent sources (e.g., gaseous discharge sources), cathode luminescent sources using electronic satiation, galvano-luminescent sources, crystallo-luminescent sources, kine-luminescent sources, thermo-luminescent sources, tribo luminescent sources, sonoluminescent sources, radio luminescent sources, and luminescent polymers.

A given light source may be configured to generate electromagnetic radiation within the visible spectrum, outside the visible spectrum, or a combination of both. Hence, the terms "light" and "radiation" are used interchangeably herein. Additionally, a light source may include as an integral component one or more filters (e.g., color filters), lenses, or other optical components. Also, it should be understood that light sources may be configured for a variety of applications, including, but not limited to, indication, display, and/or illumination. An "illumination source" is a light source that is particularly configured to generate radiation having a sufficient intensity to effectively illuminate an interior or exterior space. In this context, "sufficient intensity" refers to sufficient radiant power in the visible spectrum generated in the space or environment (the unit "lumens" often is employed to represent the total light output from a light source in all directions, in terms of radiant power or "luminous flux") to provide ambient illumination (i.e., light that may be perceived indirectly and that may be, for example, reflected off of one or more of a variety of intervening surfaces before being perceived in whole or in part).

The term "lighting fixture" is used herein to refer to an implementation or arrangement of one or more lighting units in a particular form factor, assembly, or package. The term "lighting unit" is used herein to refer to an apparatus including one or more light sources of same or different types. A given lighting unit may have any one of a variety of mounting arrangements for the light source(s), enclosure/housing arrangements and shapes, and/or electrical and mechanical connection configurations. Additionally, a given lighting unit optionally may be associated with (e.g., include, be coupled to and/or packaged together with) various other components (e.g., control circuitry) relating to the operation of the light source(s). An "LED-based lighting unit" refers to a lighting unit that includes one or more LED-based light sources as discussed above, alone or in combination with other non LED-based light sources. A "multi-channel" lighting unit refers to an LED-based or non LED-based lighting unit that includes at least two light sources configured to respectively generate different spectrums of radiation, wherein each different source spectrum may be referred to as a "channel" of the multi-channel lighting unit.

In various implementations, a processor or controller may be associated with one or more storage media (generically referred to herein as "memory," e.g., volatile and non-volatile computer memory such as RAM, PROM, EPROM, and EEPROM, floppy disks, compact disks, optical disks, magnetic tape, etc.). In some implementations, the storage media may be encoded with one or more programs that, when executed on one or more processors and/or controllers, perform at least some of the functions discussed herein. Various storage media may be fixed within a processor or controller or may be transportable, such that the one or more programs stored thereon can be loaded into a processor or controller so as to implement various aspects of the present invention discussed herein. The terms "program" or "computer program" are used herein in a generic sense to refer to any type of computer code (e.g., software or microcode) that can be employed to program one or more processors or controllers.

In one network implementation, one or more devices coupled to a network may serve as a controller for one or more other devices coupled to the network (e.g., in a master/slave relationship). In another implementation, a networked environment may include one or more dedicated controllers that are configured to control one or more of the devices coupled to the network. Generally, multiple devices coupled to the network each may have access to data that is present on the communications medium or media; however, a given device may be "addressable" in that it is configured to selectively exchange data with (i.e., receive data from and/or transmit data to) the network, based, for example, on one or more particular identifiers (e.g., "addresses") assigned to it.

The term "network" as used herein refers to any interconnection of two or more devices (including controllers or processors) that facilitates the transport of information (e.g. for device control, data storage, data exchange, etc.) between any two or more devices and/or among multiple devices coupled to the network. As should be readily appreciated, various implementations of networks suitable for interconnecting multiple devices may include any of a variety of network topologies and employ any of a variety of communication protocols. Additionally, in various networks according to the present disclosure, any one connection between two devices may represent a dedicated connection between the two systems, or alternatively a non-dedicated connection. In addition to carrying information intended for the two devices, such a non-dedicated connection may carry information not necessarily intended for either of the two devices (e.g., an open network connection). Furthermore, it should be readily appreciated that various networks of devices as discussed herein may employ one or more wireless, wire/cable, and/or fiber optic links to facilitate information transport throughout the network.

### BRIEF DESCRIPTION OF THE DRAWINGS

In the drawings, like reference characters generally refer to the same parts throughout the different views. Also, the drawings are not necessarily to scale, emphasis instead generally being placed upon illustrating the principles of the invention.
Fig. 1 is a schematic representation of a lighting unit, in accordance with an embodiment.
Fig. 2 is a schematic representation of a lighting system, in accordance with an embodiment.
Fig. 3 is a schematic representation of a lighting system, in accordance with an embodiment.
Fig. 4 is a schematic representation of a target surface of a lighting system, in accordance with an embodiment.
Fig. 5 is a flow chart of a method for calibrating a sensor within a lighting system, in accordance with an embodiment.

### DETAILED DESCRIPTION OF EMBODIMENTS

The present disclosure describes various embodiments of a lighting unit configured to improve the calibration of a sensor. More generally, Applicant has recognized and appreciated that it would be beneficial to provide a lighting unit, fixture, or system that measures a quality of a target surface or region with a first sensor, together with a high-quality external sensor that measures a specific, predetermined region within the target surface or region with a first sensor in order to improve calibration of the first sensor. A particular goal of utilization of certain embodiments of the present disclosure is to adjust the light output of a lighting unit using input from a calibrated first sensor.

In view of the foregoing, various embodiments and implementations are directed to a lighting unit or system with a sensor that measures a quality of a target surface or area. Another sensor, which is external to the first sensor, such as a camera capable of taking two-dimensional and/or three-dimensional images, a time-of-flight camera, a multispectral imager, an occupancy sensor such as a passive infrared sensor (PIR) among other types of occupancy sensors, a thermal imager, a radar sensor, an RF-sensor, and/or a microphone, is utilized to characterize a specific sub-surface or -area within the target surface or area measured by the first sensor. The lighting system utilizes the sensor data from the second sensor to calibrate the first sensor. Notably, the first sensor may be a matrix sensor or a single sensor element. Similarly, the second sensor may be either a matrix sensor or a single sensor element. According to an embodiment, for example, an RF-sensor is any RF-sensor, including but not limited to radar, ultrasound, and/or microwave sensor, or can be a passive RF-sensor capable of detecting radio waves from RF-enabled devices (such as phones, WiFi access points, Bluetooth devices, and other devices).

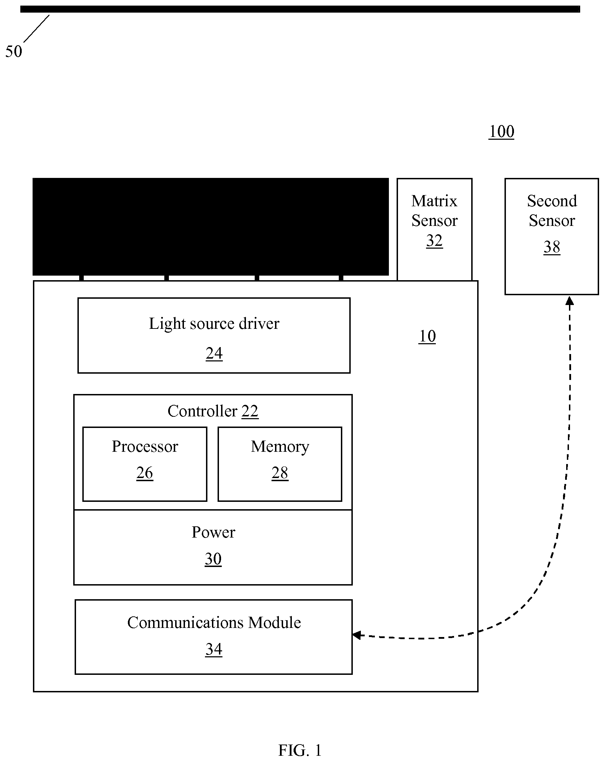

Referring to Fig. 1, in one embodiment, a lighting system 100 is provided. The lighting system includes a lighting unit 10 comprising one or more light sources 12, where one or more of the light sources may be an LED-based light source. Further, the LED-based light source may have one or more LEDs. The light source can be driven to emit light of predetermined character (i.e., color intensity, color temperature) by one or more light source drivers 24. Many different numbers and various types of light sources (all LED-based light sources, LED-based and non-LED-based light sources alone or in combination, etc.) adapted to generate radiation of a variety of different colors may be employed in the lighting unit 10. According to an embodiment, lighting unit 10 can be any type of lighting fixture, including but not limited to a night light, a street light, a table lamp, or any other interior or exterior lighting fixture.

The lighting unit 10 includes a controller 22 configured or programmed to output one or more signals to drive the one or more light sources 12a-d and generate varying intensities, directions, and/or colors of light from the light sources. For example, controller 22 may be programmed or configured to generate a control signal for each light source to independently control the intensity and/or color of light generated by each light source, to control groups of light sources, or to control all light sources together. According to another aspect, the controller 22 may control other dedicated circuitry such as light source driver 24 which in turn controls the light sources so as to vary their intensities. Controller 22 can be or have, for example, a processor 26 programmed using software to perform various functions discussed herein, and can be utilized in combination with a memory 28. Memory 28 can store data, including one or more lighting commands or software programs for execution by processor 26, as well as various types of data including but not limited to specific identifiers for that lighting unit. For example, the memory 28 may be a non-transitory computer readable storage medium that includes a set of instructions that are executable by processor 26, and which cause the system to execute one or more of the steps of the methods described herein.

Controller 22 can be programmed, structured and/or configured to cause light source driver 24 to regulate the intensity and/or color temperature of light source 12 based on predetermined data, such as ambient light conditions, among others, as will be explained in greater detail hereinafter. According to one embodiment, controller 22 can also be programmed, structured and/or configured to cause light source driver 24 to regulate the intensity and/or color temperature of light source 12 based on communications received by a communications module 34, which may be a wired or wireless communications module.

Lighting unit 10 also includes a source of power 30, most typically AC power, although other power sources are possible including DC power sources, solar-based power sources, or mechanical-based power sources, among others. The power source may be in operable communication with a power source converter that converts power received from an external power source to a form that is usable by the lighting unit. In order to provide power to the various components of lighting unit 10, it can also include an AC/DC converter (e.g., rectifying circuit) that receives AC power from an external AC power source 30 and converts it into direct current for purposes of powering the light unit's components. Additionally, lighting unit 10 can include an energy storage device, such as a rechargeable battery or capacitor, that is recharged via a connection to the AC/DC converter and can provide power to controller 22 and light source driver 24 when the circuit to AC power source 30 is opened.

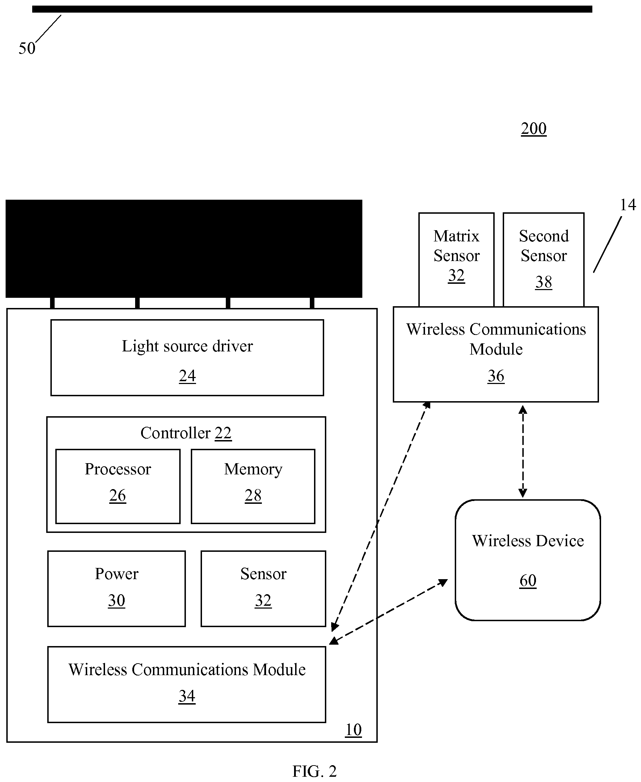

In addition, lighting unit 10 comprises a first sensor 32 being a thermal imager that is connected to an input of controller 22 and collects sensor data, such as thermal data, in the vicinity of lighting unit 10 and can transmit that data to controller 22, or externally via a communications module 34. In some embodiments such as system 200 depicted in Fig. 2, sensor 32 is remote from the lighting unit 10 and transmits obtained sensor data to a wired or wireless communications module 34 of the lighting unit. A wireless communications module 34 can be, for example, Wi-Fi, Bluetooth, IR, radio, or near field communication that is positioned in communication with controller 22 or, alternatively, controller 22 can be integrated with the wireless communications module. The first sensor 32 may be a matrix sensor or a single sensor element.

The lighting unit 10 includes a second sensor 38, such as light sensor, a camera capable of taking two-dimensional and/or three-dimensional images, a time-of-flight camera, a multispectral imager, an occupancy sensor, a thermal imager, a radio frequency sensor, and/or a microphone, among other sensors. Sensor 38 may be either a matrix sensor or a single sensor element. Sensor 38 can be located externally to device 10, or can be integrated to device 10. Sensor 38 is directly or indirectly connected to an input of controller 22 and collects information about a target surface 50 within a lighting environment and can transmit that data to controller 22, or externally via wireless communications module 34. In some embodiments such as system 200 depicted in Fig. 2, sensor 38 is remote from the lighting unit 10 and transmits obtained sensor data to wireless communications module 34 of the lighting unit. The wireless communications module 34 can be, for example, Wi-Fi, Bluetooth, IR, radio, or near field communication that is positioned in communication with controller 22 or, alternatively, controller 22 can be integrated with the wireless communications module.

One of skill in the art will recognize that a sensor can comprise one or more data collection units. Either of first sensor 32 and second sensor 38, or a single sensor if the functions of sensor 32 and second sensor 38 are performed by one sensor, can comprise one or more data collection units. As one example, sensor 32 can comprise two or more thermal imagers. As another example, second sensor 38 can comprise two or more cameras, two or more time-of-flight cameras, two or more multispectral imagers, two or more occupancy sensors, two or more thermal imagers, and/or two or more microphones, among other sensors. Additionally, the sensors can comprise a combination of two or more sensors, such as a camera, a microphone, and a passive infrared sensor. The combined sensors can be a single unit or can be multiple units in communication with a processor of the lighting unit 10. As just one example, a microphone sensor may comprise an array of two or more microphones in order to enable fine spatial alignment with detected noise.

According to an embodiment, the first sensor 32 and second sensor 38 are spatially positioned with respect to each other such that the two sensors can achieve one or more operational goals. This ensures that the region within the lighting environment for which the second sensor 38 obtains information is co-localized or co-extensive with the light meter's spatial observation window. For example, if the second sensor is a time-of-flight camera, then the time-of-flight camera must be oriented to obtain information about the same region, area, or surface within the lighting environment for which the light meter is obtaining information.

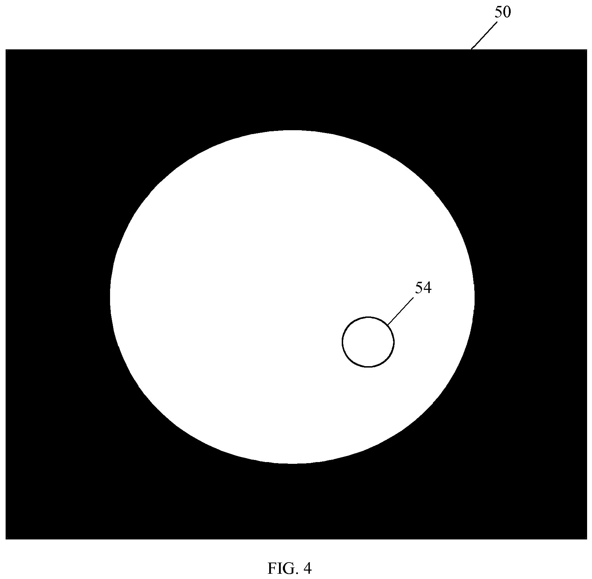

Specifically, as shown in Fig. 4, first sensor 32 and second sensor 38 are positioned such that their target regions are overlapping. Target surface 50 is the region to be illuminated by the lighting system or unit. Within that target surface, the first sensor 32 comprises a sensor region 52, from which the first sensor obtains sensor data. Although the sensor region 52 of the first sensor 32 is shown as a subset of the target surface, according to an embodiment the sensor region may include the entire target surface. Within sensor region 52, the second sensor 38 comprises a smaller sensor region 54 from which the second sensor obtains sensor data. According to an embodiment, sensor region 54 of the second sensor 38 can be a specific surface to be illuminated more accurately than other surfaces, such as a table, desk, or other surface.

Referring to Fig. 2, in one embodiment, a lighting system 200 is provided that includes a lighting unit 10. Lighting unit 10 can be any of the embodiments described herein or otherwise envisioned, and can include any of the components of the lighting units described in conjunction with Fig. 1, such as one or more light sources 12, light source driver 24, controller 22, and wireless communications module 34, among other elements. Lighting system 200 also includes a detection component 14 which includes first sensor 32 and wireless communications module 36, among other elements. Wireless communications modules 34 and 36 can be, for example, Wi-Fi, Bluetooth, IR, or near field communication that is positioned in communication with each other and/or with a wireless device 60, which can be, for example, a network, a computer, a server, or a handheld computing device, among other wireless devices. The detection component 14 may or may not include second sensor 38. In Fig. 2, the detection component 14 of lighting system 200 comprises the second sensor 38.

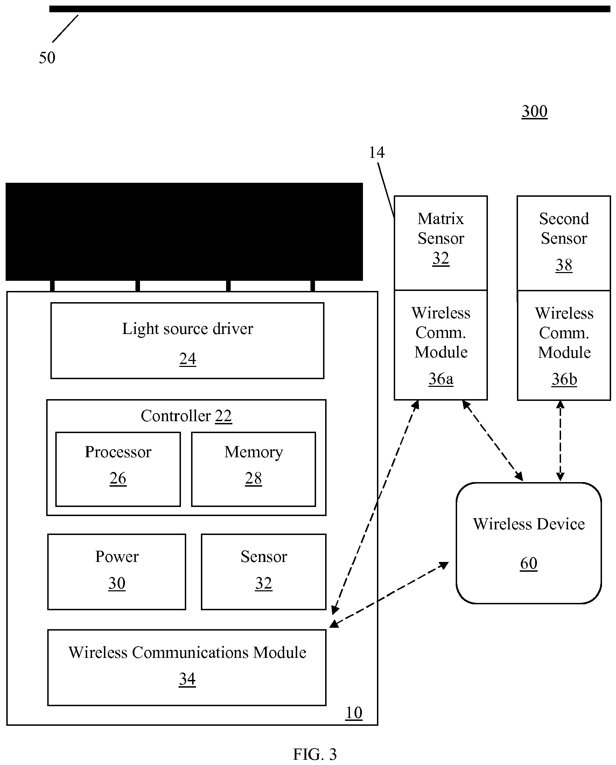

In contrast, when second sensor 38 is external to both the lighting unit 10 and the detection component 14, the second sensor may comprise an additional wireless communication module. For example, referring to Fig. 3, in one embodiment, the lighting system 300 comprises a lighting unit 10, a detection component 14 with first sensor 32 and a wireless communications module 36a, and an external second sensor 38 with a wireless communications module 36b.

According to an embodiment, a lighting system as describe or otherwise envisioned herein comprises a luminaire with an integrated thermal camera serving as first sensor 32. The thermal camera provides a temperature reading that may have limited accuracy for a variety of reasons. The lighting system also includes a high-resolution temperature sensor serving as second sensor 38 that obtains data from a specific region within the image region of the integrated thermal camera. The temperature reading from the high-resolution temperature sensor 38 can then be utilized to calibrate the performance of the integrated thermal camera 32.

According to an embodiment, similar analysis and calibration are utilized for matrix sensing elements, being thermal imagers, which are able to monitor presence and environmental conditions relevant to light control and beyond.

According to an embodiment, the lighting systems described or otherwise envisioned herein can be adapted to indoor or outdoor use, such as presence detection, among many, many others. In an office environment, for example, objects like persons and electronic devices are localized due to their thermal signature. The thermal information could be used to extract environmental conditions. However, the activity of persons and heat-dissipating devices in the office room influences the thermal readings. Accordingly, if a second sensor such as a thermostat is present within the field of view, that region in the image could be utilized for calibration of the sensor. The accurate and absolute temperature reading of the thermostat could be compared with the pixels information observing the same region.

According to another embodiment, the first and/or second sensor of the lighting unit may be utilized by a neighboring lighting unit, either in the same lighting system or a neighboring lighting system. For example, when the first sensor is calibrated and it has overlap with another first sensor of a neighboring lighting unit, the first sensor can be utilized as the second sensor in the neighboring lighting unit in order to calibrate the neighboring lighting unit's first sensor. Accordingly, via propagation the complete lighting infrastructure can be calibrated by the initial second sensor. Alternatively, the second sensor can serve multiple neighboring lighting units if it is able to obtain a target region within the target region of each of the first sensors of these multiple neighboring lighting units. Many other configurations comprising two or more lighting units and shared first and/or second sensors are possible.

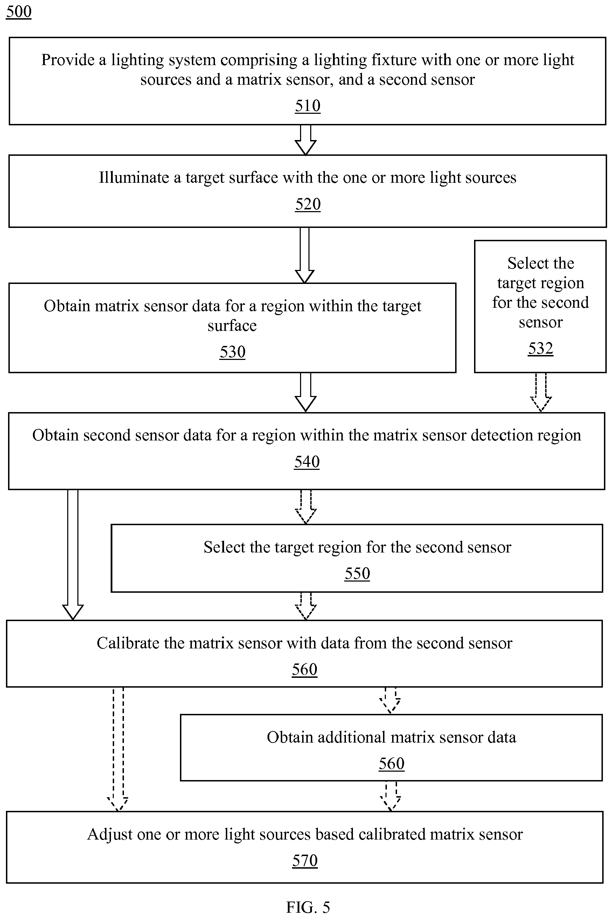

Referring to Fig. 5, in one embodiment, is a flow chart illustrating a method 500 for measuring the illumination of a target surface within a lighting environment, in accordance with an embodiment. In step 510, a lighting system 100 is provided. Lighting system 100 can be any of the embodiments described herein or otherwise envisioned, and can include any of the components of the lighting units 10 described in conjunction with Figs. 1-3, such as one or more light sources 12, light source driver 24, controller 22, first sensor 32, and communications module 34, among other elements. According to an embodiment, lighting system or lighting unit 10 is configured to illuminate all or a portion of a target surface 50. The first sensor 32 is configured to obtain sensor data from a first region 52 within the target region 50.

The lighting system 100 also includes a second sensor 38, which may be integral or external to lighting unit 10. For example, the second sensor 38 may be wired to the lighting unit 10, and/or may comprise a wireless communications module to communicate with the lighting unit 10. The second sensor 38 is configured to obtain sensor data from a region 54 within the target region 52 of the first sensor 32.

At step 520 of the method, the lighting unit 10 illuminates all or a portion of the target surface 50 with the one or more light sources 12. According to one embodiment, the lighting unit is an internal or external luminaire or lighting fixture. For example, the lighting unit can be a street fixture or other external lighting fixture and is configured to illuminate a target surface such as a street or sidewalk. As another example, the lighting unit can be an office fixture or other internal lighting fixture configured to illuminate a target surface such as a room or hallway. Many other lighting fixture locations, configurations, and targets are possible. The first sensor 32 is configured, therefore, to obtain sensor information for whichever locations, configurations, or targets with which the lighting unit is utilized.

At step 530 of the method, the first sensor 32 obtains sensor information for a region 52 within the target surface 50. Notably, according to one embodiment, the region 52 can be the entire target surface 50, or a subset of the target surface 50. The region 52 may be adjustable between the entire target surface and a subset of the target surface. The first sensor is a thermal imager. The first sensor 32 communicates the sensor information to the controller 22, where the information can be analyzed and/or can be stored within memory 28. According to one embodiment, the sensor obtains sensor data continuously. According to another embodiment, the sensor obtains sensor data periodically, such as one every minute or multiple times per minute, among many other periods of time.

At step 540 of the method, the second sensor 38 obtains sensor data for a region 54 within the region 52 of the first sensor 32. The region 54 is preferably a subset of region 52, and a subset of the target surface 50. The second sensor can be any data sensor, including but not limited to a light sensor, a camera capable of taking two-dimensional and/or three-dimensional images, a time-of-flight camera, a multispectral imager, an occupancy sensor, a thermal imager, a radio frequency sensor, and/or a microphone, among other sensors. The second sensor 32 communicates the sensor information to the controller 22, where the information can be analyzed and/or can be stored within memory 28. According to one embodiment, the second sensor obtains sensor data continuously. According to another embodiment, the second sensor obtains sensor data periodically, such as one every minute or multiple times per minute, among many other periods of time.

As shown in optional step 532, the target region 54 for the second sensor 38 can be preprogrammed or predetermined during manufacture or set-up/installation of the second sensor 38 or lighting system 100. According to an embodiment, the location of region 54 is adjustable. For example, the target region 54 of second sensor 38 can be determined by adjusting the location or positioning of the second sensor. According to an embodiment, second sensor 38 is a light sensor that obtains measures light reflected from a specific illuminated surface such as a table, desk, or other surface.

According to another embodiment, second sensor 38 is a time-of-flight camera. The time-of-flight sensor or camera receives reflected light from the lighting environment, and measures the phase between the light transmitted by the light sources of the lighting unit, and the received light. The sensor or controller can then use plane-fitting or another analysis method to determine the free space between the sensor and the target surface. According to an embodiment, accuracy of the phase measurement and the range data depends on the illumination intensity and reflectivity of objects or surfaces within the lighting environment. Additionally, the sensor is also able to detect the near infrared spectrum emitted by the sun.

According to an embodiment, second sensor 38 is a multispectral imager. A multispectral imager captures image data at two or more specific frequencies across the electromagnetic spectrum. The multispectral imager can separate wavelengths with one or more filters, or can use two or more sensors each sensitive to a different wavelength or wavelengths. The multispectral imager obtains a multispectral image of the lighting environment, which could include both target and non-target surfaces. The multispectral image can be analyzed to identify, for example, a region or regions within the image that are the target surface and the region or regions, if any, that are the non-target surface.

According to one embodiment, second sensor 38 is a thermal imager. The thermal imager captures a thermal image, or thermogram, of one or more locations within the lighting environment, and the image is utilized by the lighting unit or system to determine environmental conditions. For example, objects such as individuals and electronic devices will have a thermal signature that allows them to be identified within the thermal image. In a lighting environment with natural light, the thermal image can be utilized to detect regions of heat caused by sunlight. Other activity or objects within a lighting environment can similarly be identified and/or characterized.

According to another embodiment, second sensor 38 is an occupancy sensor. Occupancy sensors typically detect occupants using an infrared sensor, an ultrasonic sensor, and/or a microwave sensor. Using either current occupancy or an occupancy map created over time, the lighting unit or system can identify regions within a lighting environment that are affected by occupants as well as regions that are never or seldom affected by occupants.

According to one embodiment, second sensor 38 is a radio frequency sensor. Among many other possibilities, the radio frequency sensor could determine the presence of, and triangulate the location of, one or more mobile devices to reject pixels in the region of the localized mobile device. Many other options are possible.

According to yet another embodiment, second sensor 38 is a microphone. The microphone can obtain sound data that informs the system that an individual or other object is present within the lighting environment. A microphone array of two or more microphones could also be utilized to approximate the location of the individual or object within the lighting environment. As one embodiment, a room or space experiencing noise levels above a certain level, such as 50 dB for example, would indicate occupancy and/or activity in the room or space. Accordingly, the system could then execute a predetermined course of action such as temporarily suspending light intensity measurement in that space, among many other possible actions described or otherwise envisioned herein.

At optional step 550 of the method, the target region 54 for the second sensor 38 can be determined based at least in part on the data obtained by second sensor 38. According to one embodiment, a user manually selects the target region 54 based on a visual inspection of the target surface 50, and/or a visual inspection of the image or data from the first sensor 32 and/or second sensor 38. According to another embodiment, the lighting system comprises a selection module that automatically selects the target region 54 based on a model that comprises, for example, the location of the first sensor 32, second sensor 38, the light sources 12, and/or the shape, size, configuration, and/or composition of the target surface 50.

As one example, the lighting unit or system can analyze the data from the second sensor to determine a preferred target region 54. As another example, the lighting unit can analyze the data from the second sensor to determine a target region that is suitable for obtaining intensity data, and can direct the light sensor to obtain information about just the identified target region. According to an embodiment where second sensor 38 is a camera, the image data obtained by the camera can be analyzed to determine the spatial light distribution within the lighting environment. For example, the target region can be selected manually or automatically by reviewing the camera image and determining from the image the region to be monitored, or the target region can be selected by the controller of the lighting unit or system.

According to an embodiment where second sensor 38 is a time-of-flight sensor, the sensor data can be analyzed, for example, to detect a region within the lighting environment where there are no obstructions between the sensor and the target surface. According to an embodiment where second sensor 38 is a multispectral imager, the sensor data can be analyzed to identify, for example, a region or regions within the image that are the target surface and the region or regions, if any, that are the non-target surface, which will have different optical properties.

According to an embodiment where second sensor 38 is a thermal imager, the sensor data can be analyzed to detect regions within the lighting environment that have high thermal readings such as people, electronic devices, and surfaces receiving sunlight, among other regions or objects. The controller of the lighting unit or system will identify these non-target regions with a high thermal reading and will either only utilize light sensor data from areas other than the identified non-target regions, or will direct the light sensor to obtain only sensor data from areas other than the identified non-target regions.

According to an embodiment where second sensor 38 is an occupancy sensor or occupancy map created from occupancy sensor data, the occupancy information or map can be utilized to detect regions within the lighting environment that are affected by occupants and/or regions within the lighting environment that are unaffected by occupants. The controller of the lighting unit or system will identify regions that are not affected by occupants and will either utilize only light sensor data from these identified regions, or will direct the light sensor to obtain only sensor data from these identified regions. According to an embodiment where second sensor 38 is microphone, the microphone can determine occupancy or can determine the location of an individual or other object within the lighting environment. Using this information, the controller of the lighting unit or system will identify target regions for intensity analysis.

At step 560 of the method, the lighting system calibrates the first sensor 32 utilizing the data from the second sensor 38. The calibration may be performed according to a wide variety of calibration methods. For example, the lighting system may comprise an algorithm configured to calibrate the first sensor 32 by comparing the data obtained by the first sensor to data obtained by the second sensor 38. According to an embodiment, controller 22 can be or have, for example, a processor 26 programmed with software to execute the calibration algorithm, and can be utilized in combination with a memory 28. Memory 28 can store the calibration algorithm for execution by processor 26. For example, the memory 28 may be a non-transitory computer readable storage medium that comprises a set of instructions executable by processor 26, and which cause the system to execute one or more of the steps of the calibration.

According to another embodiment, the calibration algorithm correlates a room temperature measured from thermostat 38 to pixel intensities of region 54 from a thermal imager 38. In other words, a thermal imager 32 obtains thermal data from a region 52, and the algorithm correlates that data to data obtained by a thermostat 38 from a region 54 within region 52.

Once the first sensor 32 is calibrated, stored data obtained by first sensor 32 can be adjusted by the calibration factor utilized by the first sensor 32. Alternatively, once the first sensor 32 is calibrated, it can obtain calibrated data from the target surface 50. Accordingly, at optional step 560 of the method, the calibrated first sensor obtains sensor data from a portion of or the entire target surface 50.

According to an embodiment, at some point in the method, such as at steps 532, 540, and/or 550, the lighting unit or system determines when to select the target region 54 for the second sensor, and/or when to obtain calibration data. For example, the target region may only be selected, or the calibration data may only be obtained, in the absence of people or moving objects, or in the absence of other unwanted environmental conditions. As another example, the target region may only be selected, or the calibration data may only be obtained, when environmental conditions are present. For example, the target region may only be selected, or the calibration data may only be obtained in the presence of daylight. Alternatively, calibration data may only be obtained in the absence of daylight. As another example, the target region is selected or calibration data is obtained only in the absence of movement within the space. According to this embodiment, therefore, the lighting system or unit can monitor movement and/or other environmental activity or factors and utilize that information when selecting a target region or gathering calibration data.

At optional step 570 of the method, the controller utilizes the calibrated data from the first sensor 32 to adjust or otherwise adapt the light profile emitted by the lighting unit or system. According to an embodiment, the controller can adjust the beam width, angle, and/or intensity of one or more light sources. For example, the controller can adjust one or more light sources to remove a shadow detected within the lighting environment. The information could also be utilized to control the sensitivity and/or performance of one or more other sensors in order to reduce the effect of false triggers. Similarly, the information could be utilized to change a feature, parameter, or characteristic of the lighting environment over which the system has control. For example, the controller could direct a window shade to open or close, or can direct an object within the lighting environment to move from one location to another location.

While several inventive embodiments have been described and illustrated herein, those of ordinary skill in the art will readily envision a variety of other means and/or structures for performing the function and/or obtaining the results and/or one or more of the advantages described herein, and each of such variations and/or modifications is deemed to be within the scope of the inventive embodiments described herein. More generally, those skilled in the art will readily appreciate that all parameters, dimensions, materials, and configurations described herein are meant to be exemplary and that the actual parameters, dimensions, materials, and/or configurations will depend upon the specific application or applications for which the inventive teachings is/are used. Those skilled in the art will recognize, or be able to ascertain using no more than routine experimentation, many equivalents to the specific inventive embodiments described herein. It is, therefore, to be understood that the foregoing embodiments are presented by way of example only and that, within the scope of the appended claims and equivalents thereto, inventive embodiments may be practiced otherwise than as specifically described and claimed.

The indefinite articles "a" and "an," as used herein in the specification and in the claims, unless clearly indicated to the contrary, should be understood to mean "at least one."

The phrase "and/or," as used herein in the specification and in the claims, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements may optionally be present other than the elements specifically identified by the "and/or" clause, whether related or unrelated to those elements specifically identified. Thus, as a non-limiting example, a reference to "A and/or B", when used in conjunction with open-ended language such as "comprising" can refer, in one embodiment, to A only (optionally including elements other than B); in another embodiment, to B only (optionally including elements other than A); in yet another embodiment, to both A and B (optionally including other elements); etc.

As used herein in the specification and in the claims, "or" should be understood to have the same meaning as "and/or" as defined above. For example, when separating items in a list, "or" or "and/or" shall be interpreted as being inclusive, i.e., the inclusion of at least one, but also including more than one, of a number or list of elements, and, optionally, additional unlisted items. Only terms clearly indicated to the contrary, such as "only one of' or "exactly one of," or, when used in the claims, "consisting of," will refer to the inclusion of exactly one element of a number or list of elements. In general, the term "or" as used herein shall only be interpreted as indicating exclusive alternatives (i.e. "one or the other but not both") when preceded by terms of exclusivity, such as "either," "one of," "only one of," or "exactly one of." "Consisting essentially of," when used in the claims, shall have its ordinary meaning as used in the field of patent law.

As used herein in the specification and in the claims, the phrase "at least one," in reference to a list of one or more elements, should be understood to mean at least one element selected from any one or more of the elements in the list of elements, but not necessarily including at least one of each and every element specifically listed within the list of elements and not excluding any combinations of elements in the list of elements. This definition also allows that elements may optionally be present other than the elements specifically identified within the list of elements to which the phrase "at least one" refers, whether related or unrelated to those elements specifically identified. Thus, as a non-limiting example, "at least one of A and B" (or, equivalently, "at least one of A or B," or, equivalently "at least one of A and/or B") can refer, in one embodiment, to at least one, optionally including more than one, A, with no B present (and optionally including elements other than B); in another embodiment, to at least one, optionally including more than one, B, with no A present (and optionally including elements other than A); in yet another embodiment, to at least one, optionally including more than one, A, and at least one, optionally including more than one, B (and optionally including other elements); etc.

In the claims, as well as in the specification above, all transitional phrases such as "comprising," "including," "carrying," "having," "containing," "involving," "holding," "composed of," and the like are to be understood to be open-ended, i.e., to mean including but not limited to. Only the transitional phrases "consisting of' and "consisting essentially of' shall be closed or semi-closed transitional phrases, respectively.

## Claims

1. A method (500) for calibrating a first sensor (32) of a lighting unit (10), the first sensor comprising a thermal imager, the method comprising the steps of:
illuminating (520), with a light source (12) of the lighting system, a target surface (50);
obtaining (530), with the first sensor, sensor data from a first region (52) of the target surface, the sensor data comprising thermal data;
obtaining (540), with a second sensor (38), sensor data from a second region (54)
**characterized in that** the second region is a smaller region within the first region; and **in that** the method further comprises the steps of:
calibrating (560), using the sensor data obtained with the second sensor, the first sensor; and
adjusting (570) a parameter of the lighting unit based on data from the calibrated first sensor.

2. The method of claim 1, further comprising the step of manually selecting (532) the second region.

3. The method of claim 1, further comprising the step of selecting (550) the second region based at least in part on the sensor data obtained from the second sensor.

4. The method of claim 1, further comprising the step of obtaining (560), with the calibrated first sensor, additional sensor data from a first region the target surface.

5. The method of claim 1, wherein the second sensor is selected from the group consisting of a light sensor, a camera, a time-of-flight camera, a multispectral imager, an occupancy sensor, a thermal imager, an RF-sensor, and a microphone.

6. The method of claim 1, wherein said calibration step comprises a comparison of the sensor data obtained by the first sensor to the sensor data obtained by the second sensor.

7. The method of claim 1, wherein the sensor data is obtained from the second region only under a certain environmental condition.

8. A lighting unit (10) configured to calibrate a first sensor (32) comprising a thermal imager, the lighting unit comprising:
a light source (12);
a controller (22);
the first sensor (32) configured to obtain sensor data from a first region (52) of a target surface (50), the sensor data comprising thermal data;
a second sensor (38) configured to obtain sensor data from a second region (54) **characterized in that** the second region is a smaller region within the first region; and
and **in that** the controller is configured to calibrate the first sensor using the sensor data obtained with the second sensor, and adjust a parameter of the lighting unit based on data from the calibrated first sensor.

9. The lighting unit of claim 8, wherein the controller is further configured to select a location of the second region based at least in part on the sensor data obtained from the second sensor.

10. The lighting unit of claim 8, wherein the second sensor is selected from the group consisting of a light sensor, a camera, a time-of-flight camera, a multispectral imager, an occupancy sensor, a thermal imager, an RF-sensor, and a microphone.

11. A lighting system (100, 200, 300) configured to calibrate a first sensor (32) comprising a thermal imager, the lighting system comprising:
a lighting unit (10) comprising a light source (12), a controller (22), and the first sensor (32), the first sensor configured to obtain sensor data from a first region (52) of a target surface (50), the sensor data comprising thermal data;
a second sensor (38) configured to obtain sensor data from a second region (54) **characterized in that** the second region is a smaller region within the first region; and
**in that** the controller is configured to calibrate the first sensor using the sensor data obtained with the second sensor, and adjust a parameter of the lighting unit based on data from the calibrated first sensor.

12. The lighting system of claim 11, wherein the second sensor is selected from the group consisting of a light sensor, a camera, a time-of-flight camera, a multispectral imager, an occupancy sensor, a thermal imager, an RF-sensor, and a microphone.

## Patentansprüche

1. Verfahren (500) zum Kalibrieren eines ersten Sensors (32) einer Beleuchtungseinheit (10),
wobei der erste Sensor eine Wärmebildkamera umfasst, wobei das Verfahren die folgenden Schritte umfasst:
Beleuchten (520) einer Zieloberfläche (50) mit einer Lichtquelle (12) des Beleuchtungssystems;
Erlangen (530), mit dem ersten Sensor, von Sensordaten aus einem ersten Bereich (52) der Zieloberfläche, wobei die Sensordaten Wärmedaten umfassen;
Erlangen (540), mit einem zweiten Sensor (38), von Sensordaten aus einem zweiten Bereich (54)
**dadurch gekennzeichnet, dass**
der zweite Bereich ein kleinerer Bereich innerhalb des ersten Bereichs ist; und
dass das Verfahren weiter die folgenden Schritte umfasst:
Kalibrieren (560), unter Verwendung der mit dem zweiten Sensor erlangten Sensordaten, des ersten Sensors; und
Anpassen (570) eines Parameters der Beleuchtungseinheit auf Basis der Daten von dem kalibrierten ersten Sensor.

2. Verfahren nach Anspruch 1, weiter den Schritt des manuellen Auswählens (532) des zweiten Bereichs umfassend.

3. Verfahren nach Anspruch 1, weiter den Schritt des Auswählens (550) des zweiten Bereichs zumindest teilweise auf Basis der von dem zweiten Sensor erlangten Sensordaten umfassend.

4. Verfahren nach Anspruch 1, weiter den Schritt des Erlangens (560), mit dem kalibrierten ersten Sensor, von zusätzlichen Sensordaten aus einem ersten Bereich die Zieloberfläche umfassend.

5. Verfahren nach Anspruch 1, wobei der zweite Sensor ausgewählt ist aus der Gruppe, bestehend aus einem Lichtsensor, einer Kamera, einer TOF-Kamera, einem Multispektralbildgeber, einem Anwesenheitssensor, einer Wärmebildkamera, einem HF-Sensor und einem Mikrofon.

6. Verfahren nach Anspruch 1, wobei der Kalibrierungsschritt einen Vergleich der durch den ersten Sensor erlangten Sensordaten mit den durch den zweiten Sensor erlangten Sensordaten umfasst.

7. Verfahren nach Anspruch 1, wobei die Sensordaten aus dem zweiten Bereich nur unter einer bestimmten Umgebungsbedingung erlangt werden.

8. Beleuchtungseinheit (10), welche konfiguriert ist, einen ersten Sensor (32) zu kalibrieren, welcher eine Wärmebildkamera umfasst, wobei die Beleuchtungseinheit umfasst:
eine Lichtquelle (12);
eine Steuereinheit (22);
den ersten Sensor (32), welcher konfiguriert ist, Sensordaten aus einem ersten Bereich (52) einer Zieloberfläche (50) zu erlangen, wobei die Sensordaten Wärmedaten umfassen;
einen zweiten Sensor (38), welcher konfiguriert ist, Sensordaten aus einem zweiten Bereich (54) zu erlangen, **dadurch gekennzeichnet, dass** der zweite Bereich ein kleinerer Bereich innerhalb des ersten Bereichs ist; und
und dass die Steuereinheit konfiguriert ist, den ersten Sensor unter Verwendung der mit dem zweiten Sensor erlangten Sensordaten zu kalibrieren, und einen Parameter der Beleuchtungseinheit auf Basis von Daten von dem kalibrierten ersten Sensor anzupassen.

9. Beleuchtungseinheit nach Anspruch 8, wobei die Steuereinheit weiter konfiguriert ist, einen Ort des zweiten Bereichs zumindest teilweise auf Basis der von dem zweiten Sensor erlangten Sensordaten auszuwählen.

10. Beleuchtungseinheit nach Anspruch 8, wobei der zweite Sensor ausgewählt ist aus der Gruppe, bestehend aus einem Lichtsensor, einer Kamera, einer TOF-Kamera, einem Multispektralbildgeber, einem Anwesenheitssensor, einer Wärmebildkamera, einem HF-Sensor und einem Mikrofon.

11. Beleuchtungssystem (100, 200, 300), welches konfiguriert ist, einen ersten Sensor (32) zu kalibrieren, welcher eine Wärmebildkamera umfasst, wobei das Beleuchtungssystem umfasst:
eine Beleuchtungseinheit (10), umfassend eine Lichtquelle (12), eine Steuereinheit (22) und den ersten Sensor (32), wobei der erste Sensor konfiguriert ist, Sensordaten aus einem ersten Bereich (52) einer Zieloberfläche (50) zu erlangen, wobei die Sensordaten Wärmedaten umfassen;
einen zweiten Sensor (38), welcher konfiguriert ist, Sensordaten aus einem zweiten Bereich (54) zu erlangen, **dadurch gekennzeichnet, dass** der zweite Bereich ein kleinerer Bereich innerhalb des ersten Bereichs ist; und
dass die Steuereinheit konfiguriert ist, den ersten Sensor unter Verwendung der mit dem zweiten Sensor erlangten Sensordaten zu kalibrieren, und einen Parameter der Beleuchtungseinheit auf Basis von Daten von dem kalibrierten ersten Sensor anzupassen.

12. Beleuchtungssystem nach Anspruch 11, wobei der zweite Sensor ausgewählt ist aus der Gruppe, bestehend aus einem Lichtsensor, einer Kamera, einer TOF-Kamera, einem Multispektralbildgeber, einem Anwesenheitssensor, einer Wärmebildkamera, einem HF-Sensor und einem Mikrofon.

## Revendications

1. Procédé (500) pour étalonner un premier capteur (32) d'une unité d'éclairage (10), le premier capteur comprenant un imageur thermique, le procédé comprenant les étapes suivantes :
éclairage (520), avec une source de lumière (12) du système d'éclairage, d'une surface cible (50) ;
obtention (530), avec le premier capteur, de données de capteur provenant d'une première région (52) de la surface cible, les données de capteur comprenant des données thermiques ;
obtention (540), avec un second capteur (38), de données de capteur provenant d'une seconde région (54),
**caractérisé en ce que**
la seconde région est une région plus petite à l'intérieur de la première région ; et **en ce que** le procédé comprend en outre les étapes suivantes :
étalonnage (560), en utilisant les données de capteur obtenues avec le second capteur, du premier capteur ; et
ajustement (570) d'un paramètre de l'unité d'éclairage sur la base de données provenant du premier capteur étalonné.

2. Procédé selon la revendication 1, comprenant en outre l'étape de sélection manuelle (532) de la seconde région.

3. Procédé selon la revendication 1, comprenant en outre l'étape de sélection (550) de la seconde région sur la base au moins en partie des données de capteur obtenues à partir du second capteur.

4. Procédé selon la revendication 1, comprenant en outre l'étape d'obtention (560), avec le premier capteur étalonné, de données de capteur supplémentaires provenant d'une première région de la surface cible.

5. Procédé selon la revendication 1, dans lequel le second capteur est choisi dans le groupe constitué d'un capteur de lumière, d'une caméra, d'une caméra de temps de vol, d'un imageur multispectral, d'un capteur d'occupation, d'un imageur thermique, d'un capteur RF et d'un microphone.

6. Procédé selon la revendication 1, dans lequel ladite étape d'étalonnage comprend une comparaison des données de capteur obtenues par le premier capteur aux données de capteur obtenues par le second capteur.

7. Procédé selon la revendication 1, dans lequel les données de capteur sont obtenues à partir de la seconde région uniquement dans une certaine condition environnementale.

8. Unité d'éclairage (10) configurée pour étalonner un premier capteur (32) comprenant un imageur thermique, l'unité d'éclairage comprenant :
une source de lumière (12) ;
un dispositif de commande (22) ;
le premier capteur (32) configuré pour obtenir des données de capteur provenant d'une première région (52) d'une surface cible (50), les données de capteur comprenant des données thermiques ;
un second capteur (38) configuré pour obtenir des données de capteur provenant d'une seconde région (54), **caractérisée en ce que**
la seconde région est une région plus petite à l'intérieur de la première région ; et
**en ce que** le dispositif de commande est configuré pour étalonner le premier capteur en utilisant les données de capteur obtenues avec le second capteur, et ajuster un paramètre de l'unité d'éclairage sur la base de données provenant du premier capteur étalonné.

9. Unité d'éclairage selon la revendication 8, dans laquelle le dispositif de commande est en outre configuré pour sélectionner un emplacement de la seconde région sur la base au moins en partie des données de capteur obtenues du second capteur.

10. Unité d'éclairage selon la revendication 8, dans laquelle le second capteur est sélectionné dans le groupe constitué d'un capteur de lumière, d'une caméra, d'une caméra de temps de vol, d'un imageur multispectral, d'un capteur d'occupation, d'un imageur thermique, d'un capteur RF et d'un microphone.

11. Système d'éclairage (100, 200, 300) configuré pour étalonner un premier capteur (32) comprenant un imageur thermique, le système d'éclairage comprenant :
une unité d'éclairage (10) comprenant une source de lumière (12), un dispositif de commande (22), et le premier capteur (32), le premier capteur étant configuré pour obtenir des données de capteur provenant d'une première région (52) d'une surface cible (50), les données de capteur comprenant des données thermiques ;
un second capteur (38) configuré pour obtenir des données de capteur provenant d'une seconde région (54), **caractérisé en ce que**
la seconde région est une région plus petite à l'intérieur de la première région ; et
**en ce que** l'unité de commande est configurée pour étalonner le premier capteur en utilisant les données de capteur obtenues avec le second capteur, et ajuster un paramètre de l'unité d'éclairage sur la base des données provenant du premier capteur étalonné.

12. Système d'éclairage selon la revendication 11, dans lequel le second capteur est sélectionné dans le groupe constitué d'un capteur de lumière, d'une caméra, d'une caméra de temps de vol, d'un imageur multispectral, d'un capteur d'occupation, d'un imageur thermique, d'un capteur RF et d'un microphone.
